# EUROPÄISCHE PATENTSCHRIFT

(11) **EP 0 330 811 B1**
(45) Veröffentlichungstag und Bekanntmachung des Hinweises auf die Patenterteilung: **17.03.1993**
(21) Anmeldenummer: 89100207.3
(22) Anmeldetag: 07.01.1989
(51) Int. Cl.: B29C 47/32

(54) **Verfahren und Vorrichtung zur Bearbeitung von elastomerischen Massen, insbesondere Kunststoff, Kautschuk und deren Mischungen**
Method and apparatus for working elastomeric masses, in particular plastic, rubber or a mixture thereof
Procédé et dispositif de travail de masses d'élastomères, en particulier de matière plastique, de caoutchouc et de leur mélange

(30) Priorität: 29.02.1988 DE 3806387
(43) Veröffentlichungstag der Anmeldung: 06.09.1989
(73) Patentinhaber: Paul Troester Maschinenfabrik, D-30519 Hannover (DE)
(72) Erfinder: Gohlisch, Hans-Joachim, Dipl.-Ing., D-3000 Hannover 81 (DE); Klein, Heinz, D-3017 Pattensen (DE)
(74) Vertreter: Junius, Walther, Dr.

(56) Entgegenhaltungen:
- CH-A- 401 453
- DE-A- 1 479 997
- FR-A- 2 140 121
- FR-A- 2 207 014
- FR-A- 2 288 606
- FR-A- 2 373 383
- US-A- 327 465
- US-A- 3 408 694
- US-A- 3 694 120
- US-A- 4 060 368

## Beschreibung

Die Erfindung betrifft ein Verfahren und eine Vorrichtung zur Bearbeitung von elastomerischen Massen, insbesondere Kunststoffen, Kautschuk oder deren Mischungen in Roller-Head-Anlagen, bei dem das zu bearbeitende Material in einem Extruder plastifiziert und homogenisiert, durch einen an dem Extruder angebrachten Spritzkopf extrudiert und dann durch einen von zwei Walzen gebildeten Spalt geführt wird.

Eine derartige Anlage zur Bearbeitung von elastomerischen Massen ist aus der US-PS 40 60 368 bekannt geworden. Bei dieser bekannten Anlage wird das Extrudat bereits im Extruder so weit plastifiziert und homogenisiert, daß im Kalander ein Aufschließen des Materiales nicht mehr erfolgt. Bei dieser Anlage beobachtet man ebenso wie bei anderen Anlagen oder eingangs genannten Art, daß die den Kalander verlassende Platte eine stärkere Dicke als den weitesten Spalt aufweist. Für die Herstellung hochgenau dicker Platten ist es daher erforderlich, die Dicke der erzeugten Platte zu messen und entsprechend den Walzenspalt zu korrigieren.

Bei der Anlage der US-PS 40 60 368 stellt man sogar fest, daß die Dicke der hergestellten Platte nicht einheitlich ist, sondern in der Mitte der Platte der Walzenspaltdimension recht exakt entspricht, zu beiden Seiten aber dicker ist.

Erheblich größere Schwierigkeiten treten dort auf, wo das Extrudat im Extruder nicht völlig aufgeschlossen wird, sondern ein Teil der Aufschließarbeit im Kalander geleistet wird. Dort besteht die Gefahr, daß bei einer Änderung der Walzenspaltweite das Material verbrennt, sich zersetzt oder anvulkanisiert bzw. nicht voll aufgeschlossen wird, wie es die DE-PS 24 50 225 beschreibt. Bei dieser bekannten Anlage versucht man die Produktqualität dadurch zu verbessern, daß man durch Austausch, Einsetzen oder Herausnehmen von Düsenlippenpaaren den Düsenmund vor- oder zurückverlegt, um damit die mit dem zu verarbeitenden Material vor der engsten Stelle des Walzenspaltes in Kontakt befindliche Strecke des Walzenumfanges zu verändern. Hierdurch wird die vom Kalander geleistete Aufschließarbeit auf bestimmte Werte eingestellt. So kann eine Überhitzung des Materials mit seinen schädlichen Folgen für die Produktionsqualität vermindert werden. Es ist aber jeweils für eine Walzenspaltverstellung auch ein Austausch von Düsenlippen erforderlich. Dieser Austausch von Düsenlippen behindert die Produktion jedoch erheblich. Auch hier weisen die erzeugten Platten bzw. Folien eine größere Dicke als die Dimension des Walzenspaltes auf.

Durch die FR-A-22 07 014 ist ein Spritzkopf bekannt geworden, welcher eine einzige rotierende Walze aufweist. Im Spritzkopf selbst findet zuerst eine Verteilung des aus dem Extruderzylinder kommenden Extrudates zu einer Platte von rechteckigem Querschnitt statt. Sodann durchläuft das Extrudat einen Spalt, welcher einerseits durch einen Teil der Oberfläche der Walze, andererseits aus einem gewölbten Wandstück gebildet ist, welches durch eine Ausformleiste abgeschlossen ist. Am Ort des Anschlusses der Ausformleiste an die gewölbte Fläche befindet sich ein Querschnittssprung, der zu Wirbelbildungen vor dieser Stelle Anlaß ist. In der extrudierten Platte kurz vor der Ausstoßzone aufgetretene Wirbelbildungen sind oftmals Anlaß zu Inhomogenitäten des Extrudates.

Es ist die Aufgabe der vorliegenden Erfindung, mit einem besonders einfach aufgebauten Spritzkopf in einer Roller-Head-Anlage besonders exakt dem Walzenspalt an Stärke entsprechende Platten bzw. Folien hoher Homogenität zu erzeugen, ohne daß bei einer Veränderung der Platten- bzw. Foliendicke Teile ausgewechselt werden müssen.

Die Erfindung erreicht dieses dadurch, daß das im aus parallelen Austrittsflächen gebildeten Spalt des Spritzkopfes zu einer Platte ausgeformte Material durch einen Spalt geführt wird, der durch einen Teil der Umfangsfläche der einen Walze, die auf die gewünschte Spaltstärke einstellbar ist, und ein entsprechend der Umfangsfläche dieser Walze konkav als Hohlzylinderfläche geformtes feststehendes Formwerkzeug, dessen Oberfläche sich stufenlos und glatt von den Austrittsflächen des Spritzkopfes bis zum Walzenspalt erstreckt gebildet ist, bevor das Material in die engste Stelle des Spaltes zwischen den beiden Walzen einläuft.

Die erfindungsgemäße Vorrichtung zeichnet sich dadurch aus, daß der Spalt des Düsenmundes des Spritzkopfes von zwei parallelen Flächen als im wesentlichen rechteckige Austrittsöffnung gebildet ist, daß zwischen diesem Düsenmund und dem Extruder im Spritzkopf mindestens ein Verteiler angeordnet ist und daß mit Abstand von der einen Walze des Kalanders vor der engsten Stelle des Kalanderspaltes und hinter dem Düsenmund des Spritzkopfes ein feststehendes Formwerkzeug mit konkaver hohlzylindrischer Oberfläche, die sich stufenlos und glatt von den Austrittsflächen des Spritzkopfes bis zum Walzenspalt erstreckt, angeordnet ist.

Hierbei wird aus dem Mundstück des Breitspritzkopfes eine gleichmäßig dicke Platte extrudiert und, bevor sie durch die engste Stelle des Walzenspaltes läuft, durch einen nicht wesentlich größeren Spalt mit Hilfe einer Kalanderwalze gezogen und durch den Extrusionsdruck gedrückt. In diesem Spaltraum zwischen dem feststehenden Formwerkzeug mit konkaver Oberfläche und der sich drehenden einen Kalanderwalze wird das aus Makromolekülen bestehende Material in Förderrichtung ausgerichtet. Hierdurch wird erreicht, daß das extrudierte und in dieser Weise in Förderrichtung ausgerichtete Material nach dem Verlassen der engsten Stelle des Walzenspaltes sich in Förderrichtung nicht mehr stark verjüngt. Die Zugkomponente bewirkt einen Druckabfall im Kopf. Damit werden z.B. die Schließkräfte und die Massetemperatur geringer.

Überraschenderweise wurde festgestellt, daß diese hervorragende Homogenität und diese Eigenschaft, sich nicht mehr quer zur Förderrichtung hinter der engsten Stelle des Walzenspaltes zu dehnen, auch bei Walzenspaltverstellungen, also bei der Herstellung verschieden starker Platten, erhalten bleibt, ohne daß irgend welche Düsenlippen oder andere Teile ausgewechselt werden müssen.

Diese Feststellung läßt sich dadurch erklären, daß eine Ausrichtung der Makromoleküle im Spaltraum zwischen dem feststehenden Formwerkzeug und der einen sich drehenden Walze erfolgt. In diesem Spaltraum wirkt auf das Extrudat Bewegung von nur einer Seite her, nämlich von der Walze her. Auf der gegenüberliegenden Seite befindet sich das feststehende Formwerkzeug, welches auf das Material keine Bewegung ausübt. Dadurch wird das der Walze näher liegende Material schneller bewegt als das der Walze entfernter liegende Material, es bestehen somit Geschwindigkeitsunterschiede im Materialfluß. Diese Geschwindigkeitsunterschiede wirken dahin, daß die mit Formgedächtnis ausgestatteten Teile, die durch ihre Bearbeitung im Extruder aus ihrer ursprünglichen Lage in andere Lagen gebracht sind, sich wieder in ihre ursprüngliche Lage einordnen können, wobei ihre Längsrichtung in Förderrichtung liegt. Dabei nehmen die in Längsrichtung liegenden Materialteile mit Formgedächtnis weniger Raum ein als die ungeordnet und in Querrichtung liegenden Materialteile. Sobald sie ihre Ordnung in Längsrichtung erreicht haben, fließen sie somit leichter und schneller durch den Spaltraum. Diese Ordnung der mit Formgedächtnis ausgestatteten Materialteilchen in Transportrichtung führt auch nach Verlassen der engsten Stelle des Walzenspaltes dazu, daß die erzeugte Platte in ihrer Dicke nur noch geringfügig stärker wird, weil eben nur noch wenig Materialteilchen da sind, die nach ihrer Bearbeitung sich aus ihrer deformierten Lage aufgrund ihres Formgedächtnisses in ihre ursprüngliche Lage zurückdehnen wollen. Der Erfolg der erfindungsgemäßen Behandlung ist somit ein stärker homogenisiertes und in seinen Dimensionen erheblich exakteres Erzeugnis. Verfahrenstechnisch ist es überraschend, daß eine einfache Verstellung der beiden Walzen, also eine einfache Walzenspaltveränderung Platten anderer Materialstärke, aber gleicher Homogenität und gleicher Exaktheit der Plattenstärke hervorbringen.

Baulich ist es besonders einfach, wenn das Formwerkzeug fest an der einen Hälfte des Spritzkopfes angebracht ist oder ein vorstehendes Teil von dieser Hälfte ist, und wenn die Oberfläche stufenlos und glatt von dem Formwerkzeug in den Spritzkopf übergeht.

Um bei Auftreten von Verschleißerscheinungen am Formwerkzeug nicht eine ganze Spritzkopfhälfte auswechseln zu müssen ist es vorteilhaft, wenn die Oberfläche des Formwerkzeuges als auswechselbare Leiste ausgebildet ist und an der einen Hälfte des Spritzkopfes angebracht ist.

Das Wesen der Erfindung ist nachstehend anhand einer Gegenüberstellung einer aus der US-PS 40 60 368 bekannten Anlage und der erfindungsgemäßen Anlage näher erläutert. Es zeigen:
- Fig. 1: die bekannte Anlage im zusammengebauten Zustand in einem Mittenschnitt,
- Fig. 2: die bekannte Anlage im auseinandergebauten Zustand,
- Fig. 3: die zusammengebaute Anlage in einem Seitenschnitt,
- Fig. 4: eine Ansicht des Spritzkopfes der bekannten Anlage nach Entfernung der Kalanderwalzen,
- Fig. 5: einen Mittenschnitt durch die erfindungsgemäße Anlage
- Fig. 6: eine Ansicht des Breitspritzkopfes nach Entfernen der Kalanderwalzen,
- Fig. 7: einen Schnitt durch einen anderen Breitspritzkopf
- Fig. 8: Querschnitte durch einen Breitspritzkopf.

Im Extruder 1 wird das elastomerische Material mittels der Schnecke 2 aufgeschlossen und durch den Breitspritzkopf 3,4 in den Spalt zwischen den Kalanderwalzen 6 eingeführt, die im Kalanderständer 5 verstellbar gelagert sind. Zum Zwecke der leichteren Reinigung ist der Extruder 1 gegenüber dem Kalander 5,6 verschiebbar angeordnet, wobei der Oberteil des Breitspritzkopfes 3 am Extruder, der Unterteil 4 des Breitspritzkopfes am Kalanderständer befestigt ist. Die beiden Teile des Breitspritzkopfes werden durch die Schließvorrichtung 7, die am Kalanderständer befestigt ist, zusammengepreßt, indem ein Hydraulikzylinder 8 einen Stempel auf den Oberteil 3 des Breitspritzkopfes drückt und diesen dadurch auf den Unterteil 4 des Breitspritzkopfes anpreßt.

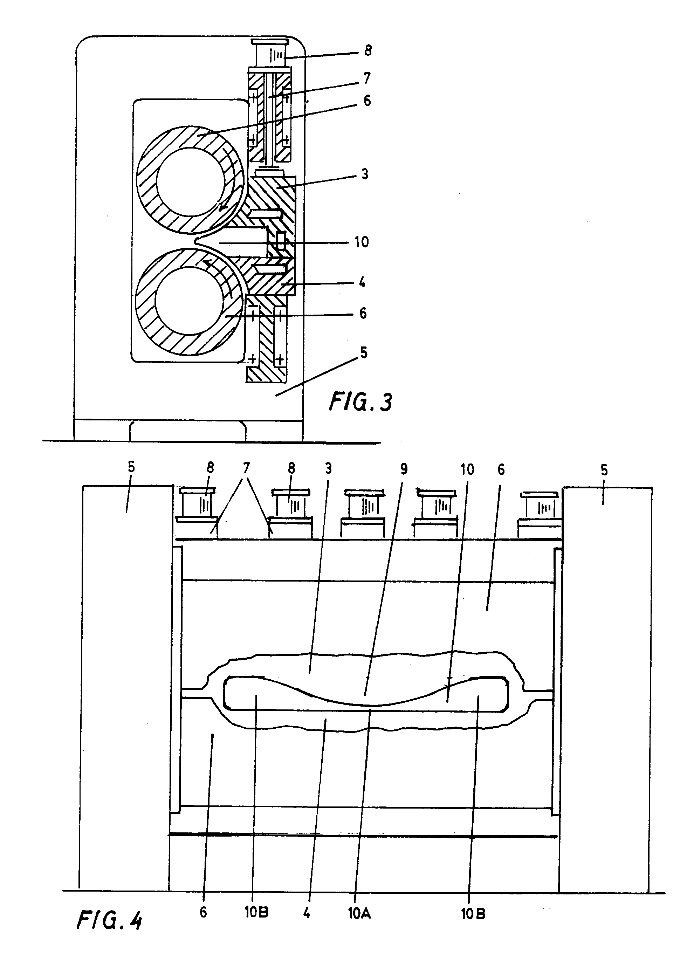

Diese aus der US-PS 40 60 368 bekannte Anlage weist im Breitspritzkopf 3, 4 eine mittig angeordnete Verteilerinsel 9 auf, die dazu dient, das in einem schmalen Strang extrudierte Material über die ganze Breite des Breitspritzkopfes zu verteilen. Diese Verteilerinsel 9 ist im Breitspritzkopf 3, 4 derart angeordnet, daß sie sich bis tief in den Zwischenraum zwischen den beiden Kalanderwalzen 6 erstreckt und dem Düsenmund eine eigenwillige Form gibt, dergestalt, daß der Düsenmund in der Mitte sehr schmal und an den beiden Seiten recht breit ist, wie dieses die Fig. 4 zeigt. Dieser Düsenmund 10 weist in der Mitte den schmalen Bereich 10A, zu den beiden Seiten die breiten Bereiche 10B auf. Bei dieser bekannten Vorrichtung ist die als Produkt erhaltene Platte bzw. Folie dicker als der Walzenspalt an seiner engsten Stelle, die erhaltene Platte ist auch nicht völlig homogen, zu den beiden Seiten weist das aus den Teilen 10B des Düsenmundes extrudierte Material eine geringfügig größere Dicke als das aus der Mitte extrudierte Material 10A auf.

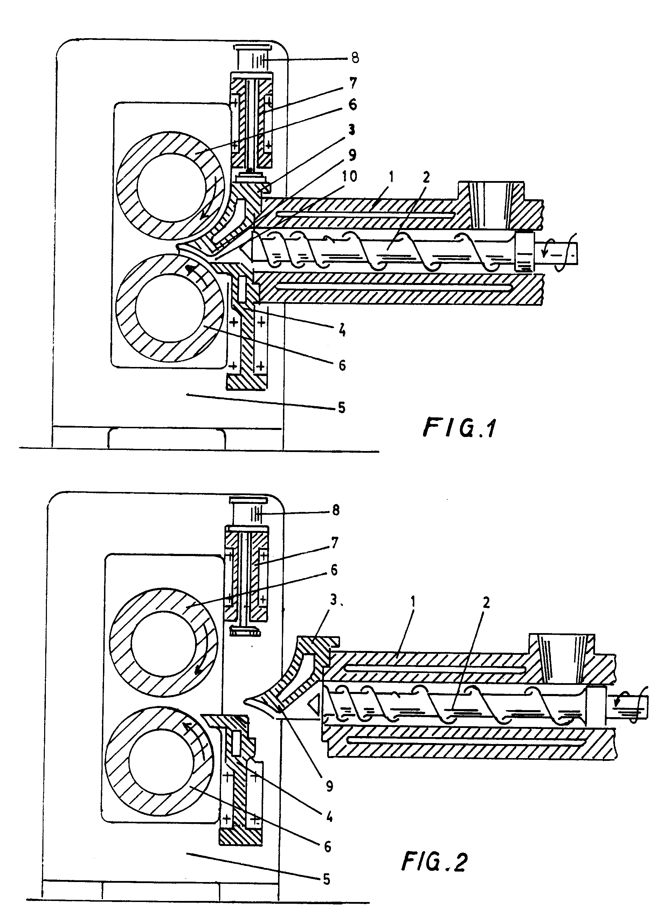

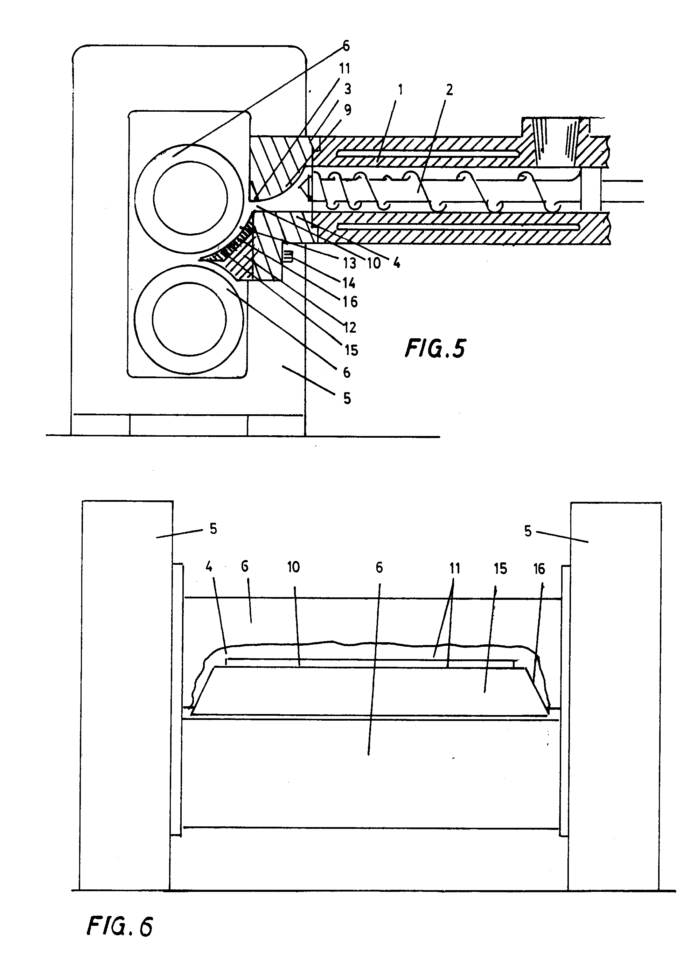

In den Fig. 5 bis 7 ist die erfindungsgemäße Vorrichtung dargestellt. Gleiche Teile sind hier mit den gleichen Bezugszeichen wie in den Fig. 1 bis 4 versehen. Auch hier ist ein Extruder 1 mit einer Schnecke 2 vorgesehen, der Breitspritzkopf 3, 4 weist ein Oberteil 3 und ein Unterteil 4 auf, im Kalanderständer 5 befinden sich zwei verstellbare Kalanderwalzen 6, im Breitspritzkopf 3, 4 ist eine Verteilerinsel 9 vorgesehen, welche das extrudierte Material innerhalb des Breitspritzkopfes 3, 4 von der Mitte weg zu den Seiten des Breitspritzkopfes 3, 4 hin drängt. Die wesentlichen Unterschiede gegenüber der bekannten Anlage sind folgende: Der Düsenmund 10 besteht aus zwei über die ganze Breite parallelen Fläche 11, in den Walzenspalt reicht ein Formwerkzeug 12 hinein, welches an einem der beiden Teile des Breitspritzkopfes 3, 4 befestigt ist, im gezeichneten Ausführungsbeispiel am Unterteil 4 des Breitspritzkopfes, von den beiden Kalanderwalzen 6 ist nur die obere Kalanderwalze verstellbar, um den Walzenspalt zu verändern. (Wäre das Formwerkzeug 12 an dem Oberteil 3 des Breitspritzkopfes 3,4 befestigt, wäre die untere Walze 6 verstellbar). Dadurch behält das Formwerkzeug 12 immer einen konstanten Abstand von der unteren Walze 6, während der Abstand zur oberen Walze entsprechend der gewünschten Platten- bzw. Folienstärke veränderbar ist. Zwischen der verstellbaren Walze 6 und dem Formwerkzeug ist dadurch ein Spalt 13 gebildet, durch welchen das Extrudat zur engsten Stelle des Walzenspaltes der beiden Kalanderwalzen 6 fließt. In diesem Spaltraum 13 findet die obengenannte Ausrichtung der Materialteile in Förderrichtung statt, weil hier das Material durch einen Spaltraum 13 fließt, dessen eine Wandung durch die sich drehende obere Kalanderwalze 6 und dessen andere Wandung durch die feststehende Oberfläche des Formwerkzeuges 12 gebildet wird.

Da die Verteilerinsel 9 im Inneren des Breitspritzkopfes angeordnet ist, ohne die Geometrie des Düsenmundes 10 zu verändern, wird aus dem Breitspritzkopf eine Platte mit parallelen Oberflächen extrudiert, und der Düsenmund hat zwei parallele Begrenzungsflächen. Aus dem Düsenmund tritt ein Extrudat aus, welches völlig aufgeschlossen ist, so daß der Kalander keine Aufschließarbeit mehr am Extrudat ausüben muß, wohl aber noch erhebliche Formarbeit, insbesondere durch die Ausrichtung der Teile des Extrudates in Förderrichtung.

Erhalten wird als Produkt eine Platte bzw. Folie, die sich durch eine hervorragende Homogenität und durch hochgenaue Abmessungen auszeichnet. Beim übergang einer Plattenstärke zur anderen braucht lediglich die obere Walze verstellt zu werden, weitere Maßnahmen sind nicht notwendig.

Damit ein abgenutztes Formwerkzeug leicht gewechselt werden kann, ist es zweckmäßig, wenn das Formwerkzeug 12 mittels Schrauben 14 am Unterteil 4 des Breitspritzkopfes 3, 4 befestigt ist oder die aktive Fläche 15 des Formwerkzeuges 12 durch eine auswechselbare Leiste 16 gebildet ist. Ein Auswechseln dieser Leiste 16 erfolgt nur gegen eine gleichgeformte Leiste. Der Wechsel erfolgt dann, wenn z.B. bei Verarbeitung von mit Fasern gemischtem Extrudat die Oberfläche der Leiste 16 abgenutzt ist.

Der Breitspritzkopf kann aus zwei Teilen zusammengesetzt sein, von denen das eine am Kalander, das andere am Extruder befestigt ist, wie dieses die Fig. 2 zeigt, die beiden Teile des Breitspritzkopfes können aber auch beide am Extruder oder beide am Kalander befestigt sein.

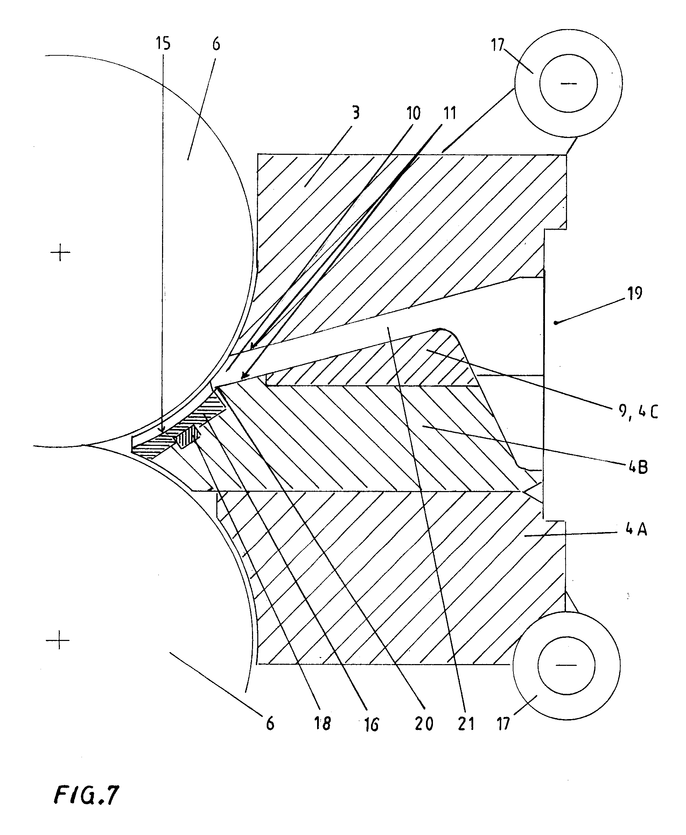

Im Ausführungsbeispiel der Fig. 7 erfolgt die Befestigung der beiden Breitspritzkopfteile (3,4) mittels Gelenken (17) am Extruder. Das untere Spritzkopfteil 4 ist aus drei Werkstücken 4A, 4B, 4C zusammengesetzt, um durch Austausch der Werkstücke 4B, 4C die Fließgeometrie ändern zu können. In das mittlere Werkstück 4B ist die Leiste 16 eingearbeitet und mittels der Feder 18 eingepaßt.

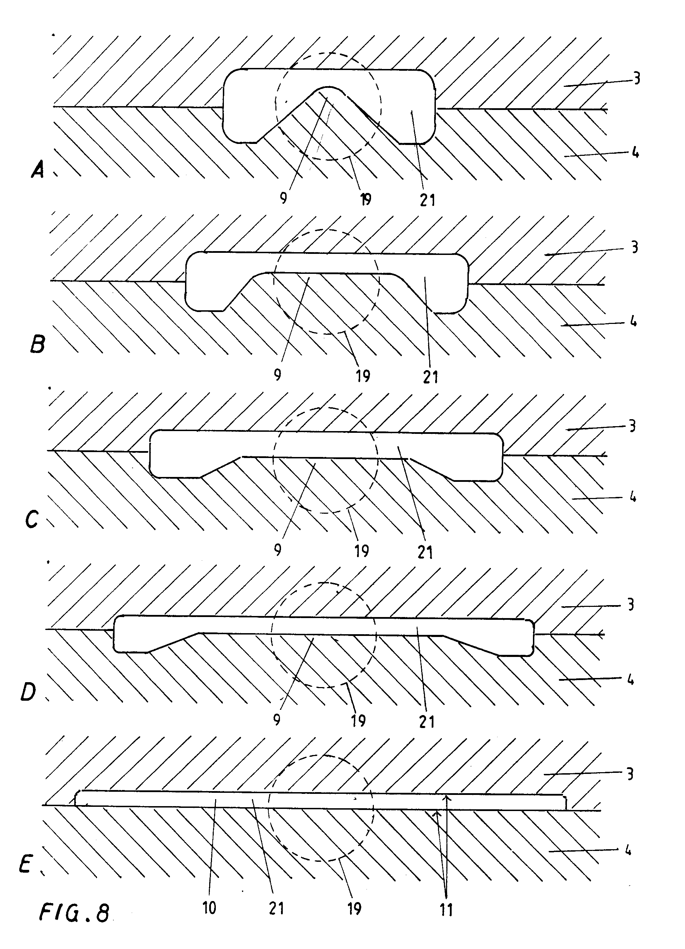

Die Fließgeometrie eines Spritzkopfes 3,4 in der erfindungsgemäßen Vorrichtung ist aus Fig. 8 ersichtlich, in der verschiedene Schnitte A (an einem Ort dicht hinter dem Ende der Extruderschnecke) bis E (Düsenmund 10 bzw. Austrittsöffnung unmittelbar vor der Kalanderwalze 6) dargestellt sind. Die durch die beiden Parallelflächen 11 gebildete Austrittsöffnung 10 hat langgestreckten rechteckigen Querschnitt. Im Breitspritzkopf wird das Extrudat aus dem gestrichelt dargestellten, im Querschnitt kreisförmigen Zylinderinnenraum 19 über in den Schnitten A bis D dargestellte Innenraumquerschnitte des Fließweges 21 des Breitspritzkopfes 3 ,4, in denen das Extrudat durch die Verteilerinsel 9 immer mehr zu den Seiten gedrückt wird, bis zur ebenen Plattenform, wie sie die Austrittsöffnung verläßt, ausgeformt und dann erst dem Kalander vorgelegt. Während im Stande der Technik das Extrudat in einer der Fig. 8A oder allenfalls Fig. 8B entsprechenden Form den Extruder verließ und dem Kalander vorgelegt wurde, der nun erhebliche Ausformarbeit zu leisten hatte, ist das bei der Erfindung anders: Das bereits dem Kalander plattenförmig vorgelegte Material wird zwischen dem feststehenden Formwerkzeug 12 in Form einer zylindrisch ausgehöhlten Platte und der einen sich drehenden Kalanderwalze 6 einer Scherung unterworfen, die zu einer Ausrichtung der Moleküle des Extrudates führt, welche über die ganze Breite und den gesamten Querschnitt gleichmäßig ist.

Dabei kann die Umlenkung des Extrudates um die Kante 20 verfahrenstechnisch von wesentlicher Bedeutung sein.

## Patentansprüche

1. Verfahren zur Bearbeitung von elastomerischen Massen,
insbesondere Kunststoffen, Kautschuk oder deren Mischungen in Roller-Head-Anlagen,
bei dem das zu bearbeitende Material in einem Extruder (1) plastifiziert und homogenisiert, durch einen an dem Extruder (1) angebrachten Spritzkopf (3,4) extrudiert und dann durch einen von zwei Walzen (5,6) gebildeten Spalt geführt wird,
dadurch gekennzeichnet,
daß das im aus parallelen Austrittsflächen (11) gebildeten Spalt des Spritzkopfes (3,4) zu einer Platte ausgeformte Material durch einen Spalt geführt wird, der durch einen Teil der Umfangsfläche der einen Walze (6), die auf die gewünschte Spaltstärke einstellbar ist,und ein entsprechend der Umfangsfläche dieser Walze (6) konkav als Holzylinderfläche geformtes feststehendes Formwerkzeug (12), dessen Oberfläche sich stufenlos und glatt von den Austrittsflächen des Spritzkopfes (3,4) bis zum Walzenspalt erstreckt gebildet ist, bevor das Material in die engste Stelle des Spaltes zwischen den beiden Walzen (6) einläuft.

2. Vorrichtung zum Bearbeiten von elastomerischen Massen,
insbesondere Kunststoffen, Kautschuk oder deren Mischungen in Roller-Head-Anlagen,
die aus einem Extruder (1), einem an diesem angebrachten Spritzkopf (3,4) und einem mit diesen zusammengebauten Kalander (5,6) besteht,
dadurch gekennzeichnet,
daß der Spalt des Düsenmundes (10) des Spritzkopfes (3,4) von zwei parallelen Flächen (11) als im wesentlichen rechteckige Austrittsöffnung gebildet ist, daß zwischen diesem Düsenmund (10) und dem Extruder (1) im Spritzkopf (3,4) mindestens ein Verteiler (9) angeordnet ist und
daß mit Abstand von der einen Walze (6) des Kalanders (5,6) vor der engsten Stelle des Kalanderspaltes und hinter dem Düsenmund (10) des Spritzkopfes (3,4) ein feststehendes Formwerkzeug (12) mit konkaver hohlzylindrischer Oberfläche, die sich stufenlos und glatt von den Austrittsflächen (11) des Spritzkopfes (3,4) bis zum Walzenspalt erstreckt, angeordnet ist.

3. Vorrichtung nach Anspruch 2,
dadurch gekennzeichnet,
daß das Formwerkzeug (12) fest an der einen Hälfte des Spritzkopfes (4) angebracht ist oder ein vorstehendes Teil von dieser Hälfte ist.

4. Vorrichtung nach Anspruch 2,
dadurch gekennzeichnet,
daß die Oberfläche des Formwerkzeuges (12) als auswechselbare Leiste (16) ausgebildet ist, die vorzugsweise auf einer Seite mindestens eine ebene Fläche aufweist und auf der gegenüberliegenden Seite mit einer hohlzylindrischen Fläche versehen ist, und an der einen Hälfte (4) des Spritzkopfes (3,4) angebracht ist.

## Claims

1. A process for processing elastomeric masses, in particular plastics, rubber or mixtures thereof in roller-head apparatus, wherein the material to be processed is plasticized and homogenized in an extruder (1), is extruded through an extruder head (3, 4) attached to the extruder (1), and then conducted through a gap formed by two rolls (5, 6), characterised in that the material, shaped into the form of a plate in the gap of the extruder head (3, 4), formed by parallel outlet surfaces (11), is conducted through a gap which is formed by a portion of the peripheral surface of the first roll (6) which is adjustable to the desired gap thickness and a fixed shaping tool (12) which has the form of a concave hollow cylindrical surface ⁽¹⁾ (corresponding to the peripheral surface of this roll), and the surface of which extends steplessly and smoothly from the outlet surfaces of the extruder head (3, 4) to the roll gap, before the material enters the narrowest point of the gap between the two rolls (6).

2. A device for processing elastomeric masses, in particular plastics, rubber or mixtures thereof in roller-head apparatus, which comprises an extruder (1), an extruder head (3, 4) attached to said extruder (1), and a calender (5, 6) assembled with said extruder and extruder head, characterised in that the gap of the nozzle mouth (10) of the extruder head (3, 4) is formed by two parallel surfaces (11) as a substantially rectangular outlet opening, that at least one distributor (9) is arranged between this nozzle mouth (10) and the extruder (1) in the extruder head (3, 4), and that a fixed shaping tool (12) possessing a concave, hollow cylindrical surface is arranged at an interval from the first roll (6) of the calender (5, 6) upstream of the narrowest point of the calender gap and downstream of the nozzle mouth (10) of the extruder head (3, 4), where said concave, hollow cylindrical surface extends steplessly and smoothly from the outlet surfaces (11) of the extruder head (3, 4) to the roll gap.

3. A device as claimed in Claim 2, characterised in that the shaping tool (12) is fixed to one half of the extruder head (4) or forms a projecting part of this half.

4. A device as claimed in Claim 2, characterised in that the surface of the shaping tool (12) has the form of an exchangeable strip (16) which preferably possesses at least one flat surface on one side, and on the opposite side is provided with a hollow cylindrical surface, and is attached to the one half (4) of the extruder head (3, 4).

## Revendications

1. Procédé de travail de masses d'élastomères, en particulier de mutières synthétiques, de caoutchouc ou de leurs mélanges dans des installations de têtes de cylindres, dans lequel la matière à travailler est plastifiée et homogénéisée dans une extrudeuse (1), est extrudée par une tête de pulvérisation (3, 4) appliquée à l'extrudeuse (1) puis conduite à travers une fente formée par deux cylindres (5, 6), caractérisé en ce que la matière transformée en une plaque dans la fente de la tête de pulvérisation (3, 4) formée par des surfaces de sortie parallèles (11) est conduite à travers une fente qui est formée par une partie de la surface enveloppante d'un outil de façonnage fixe (12) concave comme surface cylindrique creuse d'un des cylindres (6) et dont la surface s'étend sans échelonnement et de façon lisse à partir des surfaces de sortie de la tête de pulvérisation (3, 4) jusqu'à la fente des cylindres, avant que la matière ne pénètre dans la partie la plus étroite de la fente entre les deux cylindres (6).

2. Dispositif pour le travail de masses d'élastomères, en particulier de matières synthétiques, de caoutchouc ou de leurs mélanges dans des installations de têtes de cylindres, qui se compose d'une extrudeuse (1), d'une tête de pulvérisation (3, 4) qui y est appliquée et d'une calandre (5, 6) assemblée avec elle, caractérisé en ce que la fente de l'embouchure de buse (10) de la tête de pulvérisation (3, 4) est formée de deux surfaces parallèles (11) comme ouverture de sortie sensiblement rectangulaire, en ce qu'entre cette embouchure de buse (10) et l'extrudeuse (1)
dans la tête de pulvérisation (3, 4) est disposé au
moins un distributeur (9), et en ce qu'à un certain intervalle d'un des cylindres (6) de la calandre (5, 6) devant l'endroit le plus étroit de la fente de la calandre et derrière l'embouchure de buse (10) de la tête de pulvérisation (3, 4) est disposé un outil de façonnage fixe (12) à surface cylindrique creuse concave, qui s'étend sans échelonnement et de façon lisse à partir des surfaces de sortie (11) de la tête de pulvérisation (3, 4) jusqu'à la fente des cylindres.

3. Dispositif selon la revendication 2, caractérisé en ce que l'outil de façonnage (12) est appliqué de façon fixe à une moitié de la tête de pulvérisation (4) ou est une partie saillante de cette moitié.

4. Dispositif selon la revendication 2, caractérisé en ce que la surface de l'outil de façonnage (12) est formée en profilé remplaçable (16), qui présente de préférence sur un côté au moins une surface plane, et qui est muni, sur le côté opposé, d'une surface cylindrique creuse, et qui est appliqué à une moitié (4) de la tête de pulvérisation (3, 4).
